# EUROPEAN PATENT SPECIFICATION

(11) **EP 2 554 410 B1**
(45) Date of publication and mention of the grant of the patent: **21.01.2015**
(21) Application number: 12005686.6
(22) Date of filing: 02.08.2012
(51) Int. Cl.: B60H 1/00, B60H 1/14

(54) **Refrigerant circuit and vehicle air conditioning unit**
Kühlmittelkreislauf und Klimaanlageneinheit für ein Fahrzeug
Circuit réfrigérant et unité de climatisation de véhicule

(30) Priority: 03.08.2011 DE 102011109321
(43) Date of publication of application: 06.02.2013
(73) Proprietor: Valeo Klimasysteme GmbH, 96476 Bad Rodach (DE)
(72) Inventor: Sondermann, Mark, 96479 Weitramsdorf (DE); Sonnenberger, Rainer, 14059 Berlin (DE)
(74) Representative: Prinz & Partner mbB

(56) References cited:
- EP-A1- 2 072 296
- DE-A1-102009 054 186
- US-A1- 2009 249 802

## Description

This invention relates to a refrigerant circuit comprising a compressor, a low pressure branch, a high pressure branch and a heat exchanger, in particular a reversible heat exchanger, and to a vehicle air conditioning unit with such refrigerant circuit.

Such refrigerant circuit is known for example from EP 2 301 777 A1, wherein the evaporator can be used for cooling or heating a vehicle battery via a hot gas bypass line bypassing a condenser in the refrigerant circuit. As in the hot gas operation of the refrigerant circuit the condenser must be bypassed, a normal operation of the refrigerant circuit, for example with further evaporators connected in parallel, is not possible at this time.

An other known refrigerant circuit is disclosed by document EP 2 072 296 A1.

It is the object of the invention to create a refrigerant circuit comprising a heat exchanger, whose mode of operation can be selected independent of the function of further components in the refrigerant circuit.

In accordance with the invention, this object is solved by a refrigerant circuit according to claim 1. This circuit comprises a compressor, a low pressure branch, a high pressure branch, a condenser which is connected with the high pressure side of the compressor and the high pressure branch, an evaporator which is connected with the low pressure side of the compressor and a heat exchanger, wherein the heat exchanger can be operated in one flow direction as an evaporator and in a reverse flow direction as a condenser. The heat exchanger has a first port which in the evaporator mode is connected with the high pressure branch via an expansion valve and in the condenser mode is directly connected with the high pressure branch, and a second port which in the evaporator mode is connected with the low pressure side of the compressor and in the condenser mode with the high pressure side of the compressor. In this way, the mode of operation of the heat exchanger can be chosen independent of the function of further components in the refrigerant circuit. The different flow directions in the various modes of operation provide for a simple construction of the refrigerant circuit and an easy integration into existing refrigerant circuits.

The heat exchanger for example is reversible, so that in the evaporator mode the refrigerant flows through the heat exchanger from the first port to the second port and in the condenser mode from the second port to the first port. This means that the heat exchanger can be traversed by the refrigerant in both directions, which offers the advantage that a simpler construction of the refrigerant circuit is possible.

Preferably, the high pressure branch comprises a refrigerant reservoir which includes a filling port and a withdrawal port. By means of the refrigerant reservoir for example pressure differences in the high pressure branch can be reduced when the mode of operation of the heat exchanger is changed.

A liquid management in the high pressure branch of the refrigerant circuit becomes possible when the withdrawal port is arranged at a point of the refrigerant reservoir at which refrigerant accumulates in the liquid phase. In this way, it can be ensured that exclusively refrigerant in the liquid phase is withdrawn from the refrigerant reservoir.

In the evaporator mode the first port of the heat exchanger preferably is connected with the withdrawal port and in the condenser mode with the filling port of the refrigerant reservoir.

The second port of the heat exchanger can include a three-way valve. This provides for a simple and compact connection of the second port of the heat exchanger in the refrigerant circuit.

An advantageous connection of the heat exchanger to the high pressure branch in the condenser mode is made possible in that the first port is connected with the high pressure branch via a valve, preferably a shut-off valve or a check valve.

In the refrigerant circuit for example at least two heat exchangers connected in parallel are provided. In this way, a heat pump function can be realized in a simple way.

An internal heat exchanger can be provided, which provides for a heat transfer between high pressure branch and low pressure branch.

The object of the invention furthermore is solved by a vehicle air conditioning unit with a refrigerant circuit as described above, wherein a condenser for heating a vehicle interior is provided, which is connected with the high pressure side of the compressor and the high pressure branch. An evaporator is provided for cooling the vehicle interior, which is connected with the low pressure side of the compressor and the high pressure side of the compressor. In this way, it is possible to operate condenser and evaporator of the vehicle air conditioning unit independent of the mode of operation of the heat exchanger.

Preferably, the condenser is connected with a filling port of a refrigerant reservoir and the evaporator is connected with a withdrawal port of the refrigerant reservoir.

For example, at least one heat exchanger can be provided, which provides for a direct or indirect cooling or heating of a vehicle battery, preferably of an electric or hybrid vehicle.

Furthermore, it is possible that at least one, preferably at least two heat exchangers are provided in the cooling system of a vehicle.

Further features and advantages of the invention can be taken from the following description and from the drawings, to which reference is made and in which:
- Figure 1 shows a schematic view of a refrigerant circuit of the invention according to a first embodiment of the invention;
- Figure 2 shows a schematic view of a refrigerant circuit with refrigerant reservoir according to a second embodiment of the invention;
- Figure 3 shows a vehicle air conditioning unit with a direct battery cooling according to a first embodiment of the invention;
- Figure 4 shows the vehicle air conditioning unit from Figure 3 in the condenser mode of the first heat exchanger;
- Figure 5 shows the vehicle air conditioning unit from Figure 3 in the evaporator mode of the first heat exchanger;
- Figure 6 shows the vehicle air conditioning unit from Figure 3 in the condenser mode of the second heat exchanger;
- Figure 7 shows the vehicle air conditioning unit from Figure 3 in the evaporator mode of the second heat exchanger;
- Figure 8 shows a vehicle air conditioning unit with an indirect battery cooling according to a second embodiment of the invention;
- Figure 9 shows a detail view of a first embodiment of a heat exchanger;
- Figure 10 shows a detail view of a second embodiment of a heat exchanger; and
- Figure 11 shows a detail view of a third embodiment of a heat exchanger.

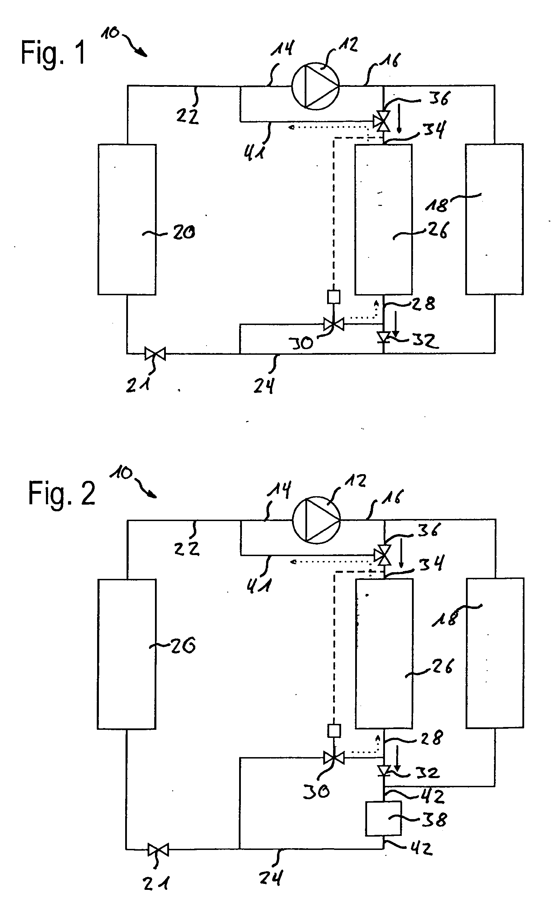

Figure 1 shows a refrigerant circuit 10 with a compressor 12, which sucks in refrigerant on a low pressure side 14 and ejects the same compressed on a high pressure side 16. In the refrigerant circuit 10 there is furthermore provided a condenser 18, in which the compressed refrigerant can cool down and liquefy, and an evaporator 20 in which the liquid refrigerant can expand and thus cools the evaporator 20. In flow direction before the evaporator 20 an expansion valve 21 is provided. Instead of the expansion valve 21, however, for example a throttling point or another suitable means for pressure reduction can also be provided. In the condenser 18 the refrigerant releases heat, whereby the condenser 18 is heated. In the evaporator 20 the refrigerant absorbs heat, whereby the evaporator 20 is cooled. By means of the compressor 12 and the expansion valve 21, the refrigerant circuit 10 is divided into a low pressure branch 22 and a high pressure branch 24.

A heat exchanger 26 is integrated into the refrigerant circuit 10, so that it can be operated in a first mode of operation as evaporator and in a second mode of operation as condenser, without influencing the general function of the other components arranged in the refrigerant circuit 10. According to a preferred embodiment, the heat exchanger 26 is a reversible heat exchanger 26.

In the illustrated first embodiment, the function of the condenser 18 and of the evaporator 20 thus is independent of the mode of operation of the reversible heat exchanger 26.

The reversible heat exchanger 26 includes a first port 28 which by line branching is connected with the high pressure branch 24 via an expansion valve 30 on the one hand and via a check valve 32 on the other hand.

A second port 34 of the reversible heat exchanger 26 includes a three-way valve 36, which can selectively connect the second port 34 of the reversible heat exchanger 26 with the low pressure side 14 or the high pressure side 16 of the compressor 12.

By actively switching the three-way valve 36, the mode of operation of the reversible heat exchanger 26 is changed. In the condenser mode, the three-way valve 36 connects the second port 34 of the reversible heat exchanger 26 with the high pressure side 16 of the compressor 12. In this way, hot compressed gas can enter into the reversible heat exchanger 26 along the direction of arrow of the continuous arrow at the second port 34 and condense by releasing heat.

The refrigerant under high pressure exits from the reversible heat exchanger 26 at the first port 28 and, as indicated by the continuous arrow, can flow in flow direction through the check valve 32 into the high pressure branch 24 of the refrigerant circuit 10. In the condenser mode, the expansion valve 30 is closed.

Subsequently, the refrigerant flows through the expansion valve 21 to the evaporator 20, at which the refrigerant absorbs heat and thereby cools the evaporator 20. Thereafter, the heated refrigerant again flows through the compressor 12 to the three-way valve 36.

When the mode of operation of the reversible heat exchanger 26 is changed into the evaporator mode, the three-way valve 36 is switched over, so that the second port 34 of the reversible heat exchanger 26 is connected with the low pressure side 14 of the compressor 12. The connection of the three-way valve 36 to the high pressure side 16 is closed. The refrigerant pressure in the reversible heat exchanger 26 thus is lower than the pressure in the high pressure branch 24 of the refrigerant circuit 10.

In its blocking direction, the check valve 32 prevents a flow of refrigerant from the high pressure branch 24 into the reversible heat exchanger 26. The expansion valve 30, which is open in this operating condition, on the other hand provides for a controlled inflow of liquid, compressed refrigerant from the high pressure branch 24 into the reversible heat exchanger 26, which can evaporate in the reversible heat exchanger 26 and via the second port 34 and the three-way valve 36 flows to the low pressure branch 22 and the low pressure side 14 of the compressor 12.

The flow direction of the refrigerant through the reversible heat exchanger 26 in the evaporator mode is indicated by the dotted arrows and is effected from the first port 28 to the second port 34 of the reversible heat exchanger 26. The refrigerant flows through the bypass line 41 past the compressor 12 into the evaporator 20.

In the condenser mode, however, the refrigerant flows in a reverse flow direction opposite to the flow direction in the evaporator mode, from the second port 34 to the first port 28, as is indicated by the continuous arrows.

In other words: In the condenser mode, the compressed and thereby heated refrigerant is branched off directly after the compressor 12 and guided through the heat exchanger 26, where a release of heat is effected, by which for example the battery can be heated, and subsequently is again fed into the refrigerant circuit before the expansion valve 21.

In the evaporator mode, the refrigerant is branched off after the condenser 18, i.e. after it has released heat and has been cooled, and in the cold condition is guided through the heat exchanger 26 in a reverse direction with respect to the condenser mode. In the heat exchanger 26, the cooled refrigerant can absorb heat, in order to cool the battery, for example. Subsequently, the refrigerant is again supplied to the refrigerant circuit after the evaporator 20 and before the compressor 12.

In the illustrated embodiment, a thermal expansion valve 30, a check valve 32 and a three-way valve 36 are provided at the two ports 28, 34 of the reversible heat exchanger 26. There can also be provided other valves which perform a corresponding function. For example, the three-way valve 36 can be replaced by two individual actively switchable closing valves in the respective connecting lines. Instead of a thermal expansion valve 30 an electronically controlled expansion valve can also be provided. The check valve 32 for example can also be formed as an actively controlled closing valve. This variant in particular is advantageous in refrigerant circuits 10 of complex design, since their function is independent of the existing pressure conditions.

It is also conceivable that the valves are designed such that in addition a complete decoupling of the reversible heat exchanger from the refrigerant circuit is possible.

Figure 2 shows a second embodiment of a refrigerant circuit 10, wherein a refrigerant reservoir 38 is arranged in the high pressure branch 24. The refrigerant reservoir 38 includes a filling port 40 and a withdrawal port 42. The filling port 40 on the one hand is connected with the condenser 18 and on the other hand via the check valve 32 with the reversible heat exchanger 26. The withdrawal port 42 is connected with the evaporator 20 and the expansion valve 30 of the reversible heat exchanger 26.

The refrigerant reservoir 38 on the one hand provides for a reduction of pressure fluctuations in the high pressure branch 24 of the refrigerant circuit 10, in particular when the mode of operation of the reversible heat exchanger 26 is changed.

On the other hand, the refrigerant reservoir 38 provides for a liquid management in the high pressure branch 24. From the condenser 18 and the reversible heat exchanger 26 operated in the condenser mode, a phase mixture of liquid and gaseous phase of the refrigerant enters into the refrigerant reservoir 38 via the filling port 40. The withdrawal port 42 is arranged at a point of the refrigerant reservoir 38 at which refrigerant accumulates in the liquid phase. In this way, liquid refrigerant exclusively is passed from the withdrawal port 42 to the evaporator 20 and the reversible heat exchanger 26 operated in the evaporator mode. Thus, the efficiency of the evaporator 20 and the reversible heat exchanger 26 operated in the evaporator mode is increased and a generation of noise at the heat exchanger 26 can be reduced.

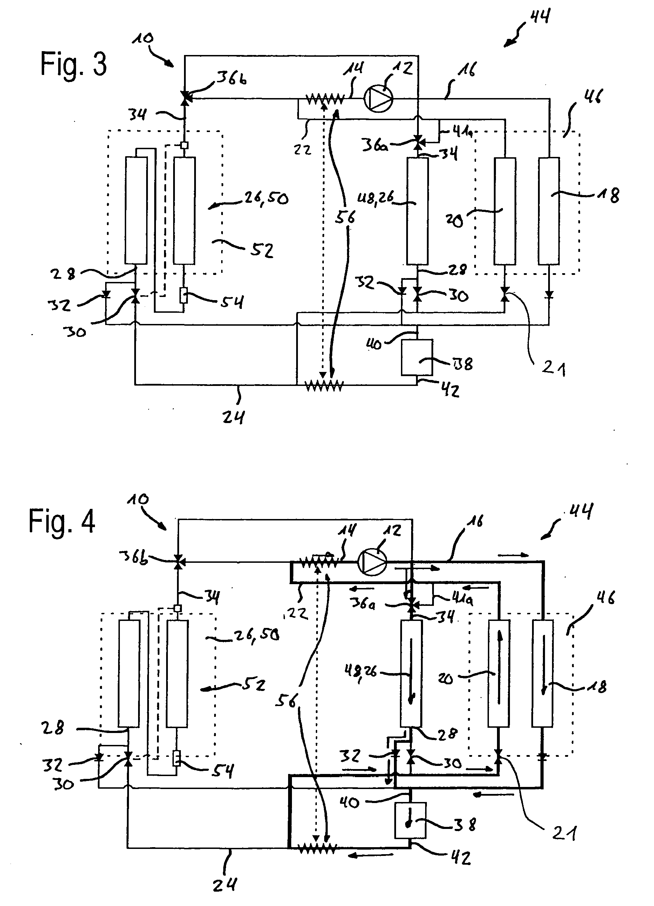

Figure 3 shows a further embodiment of a refrigerant circuit 10 which is part of a vehicle air conditioning unit 44. The vehicle air conditioning unit 44 comprises a condenser 18 for heating a vehicle interior 46 and an evaporator 20 for cooling the vehicle interior 46.

The refrigerant circuit 10 of the vehicle air conditioning unit 44 furthermore comprises two reversible heat exchangers 26 which are integrated into the refrigerant circuit 10 analogous to the preceding embodiments. A first reversible heat exchanger 26 is of the one-stage type and is provided as battery heat exchanger 48 for cooling or heating a vehicle battery. Cooling the vehicle battery is effected directly via the battery heat exchanger 48.

A second reversible heat exchanger 26 is formed as two-stage heat exchanger 50, which is arranged in a cooling system 52 for engine cooling of the vehicle, for example in the front end of the vehicle.

Between the two stages of the two-stage heat exchanger 50 a throttling point 54 is provided, which in the evaporator mode provides for a different pressure decrease and thus a different cooling capacity in the two stages. The throttling point 54 is of the switchable type, so that in particular in the condenser mode the flow path between the two stages of the two-stage heat exchanger 50 can be cleared completely.

An internal heat exchanger 56 provides for a heat transfer between the high pressure branch 24 and the low pressure branch 22 of the refrigerant circuit 10, which is indicated by the broken double arrow. The internal heat exchanger 56 is provided in the high pressure branch 24 at the withdrawal port 42 of the refrigerant reservoir 38 and in the low pressure branch 22 on the low pressure side 14 of the compressor 12.

By the battery heat exchanger 48, cooling or heating of the vehicle battery can be effected independent of the mode of operation of the vehicle air conditioning unit 44.

The vehicle air conditioning unit 44 provides for heating or cooling of the vehicle interior 46 via the condenser 18 or the evaporator 20. Depending on whether cooling or heating of the vehicle interior 46 is desired, heat or cold additionally can be released to the outside air in the condenser mode or evaporator mode via the two-stage reversible heat exchanger 50.

In this way, a temperature control of the vehicle battery and a temperature control of the vehicle interior 46 can be achieved with a common refrigerant circuit 10 independent of each other. The vehicle air conditioning unit 44 is compact and lightweight, which is advantageous in particular for vehicles with electric or hybrid drive.

The vehicle air conditioning unit 44 in addition creates a heat pump operation between the components for battery tempering and the components for tempering the vehicle interior 46. In this way energy can be saved, which reduces the fuel consumption of the vehicle and provides for a greater battery range.

The mode of operation of the vehicle air conditioning unit will be explained below with reference to Figures 4 to 7. Independent of the operating conditions of the heat exchangers 26, 48, 50, the refrigerant is compressed by the compressor 12 and thereby heated. Subsequently, the heated and compressed refrigerant flows through the condenser 18, to which it releases heat and thereby cools down. The cooled, but still compressed refrigerant subsequently flows through the expansion valve 21 into the evaporator 20. The pressure is reduced by the expansion valve 21, whereby the refrigerant further cools down and can absorb heat in the evaporator 20, so that the evaporator 20 is cooled. Subsequently, the refrigerant again flows into the compressor 12 (see Figure 4).

Before the heat exchangers 26, a three-way valve 36a, 36b each is provided, via which the passage of refrigerant through the respective heat exchanger 26 can be controlled analogous to the embodiment shown in Figures 1 and 2.

If heating of the battery is desired, the three-way valve 36a disposed before the battery heat exchanger 48 is opened such that the battery heat exchanger 48 is in flow connection with the high pressure side 16 (Figure 4). As a result, the refrigerant compressed by the compressor 12 and thereby heated flows through the heat exchanger 48 and releases heat, so that the battery is heated. Via the port 28 and the check valve 32, the refrigerant subsequently flows through the refrigerant reservoir 38 to the expansion valve 21 and to the evaporator 20. Thus, after flowing through the heat exchanger 26, 48 the refrigerant again is supplied to the regular refrigerant circuit.

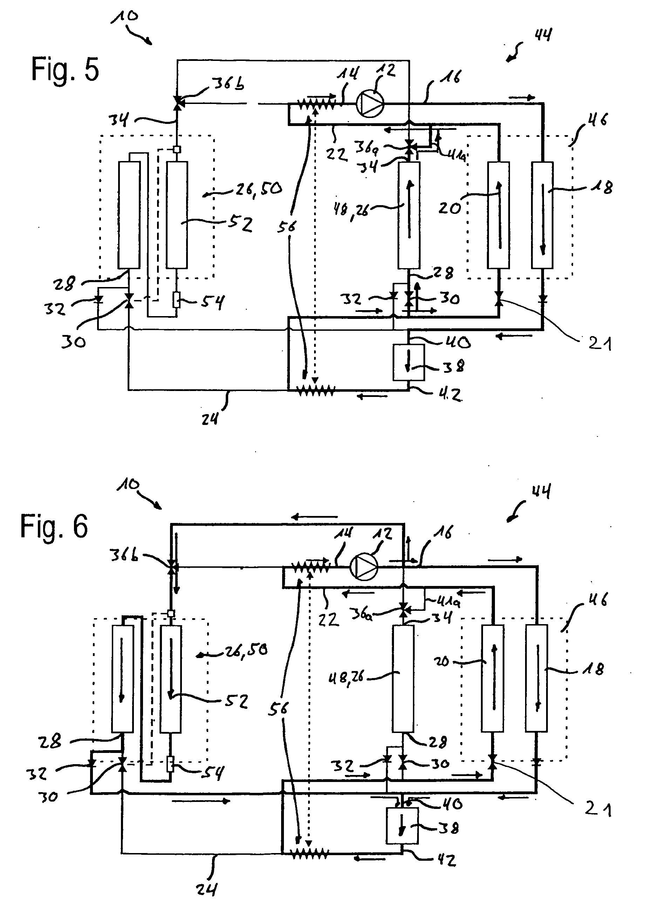

In the evaporator mode shown in Figure 5, i.e. when cooling of the battery is desired, the three-way valve 36a is set such that via the bypass line 41 a a flow connection is established between the port 34 and the low pressure side 14 directly before the compressor 12. There is no connection between the high pressure side 16 and the heat exchanger 48. The expansion valve 30 is opened, so that the port 28 is in connection with the high pressure branch 24 (see thick line). Due to the higher pressure at the port 28 as compared to the port 34, which results from the connection with the high pressure branch 24, the heat exchanger 48 is traversed by the already cooled refrigerant in an opposite direction with respect to the condenser mode as shown in Figure 4, wherein the refrigerant can absorb heat from the battery via the heat exchanger 26, 48. Subsequently, the refrigerant is again fed into the refrigerant circuit via the bypass line 41 a before the compressor 12.

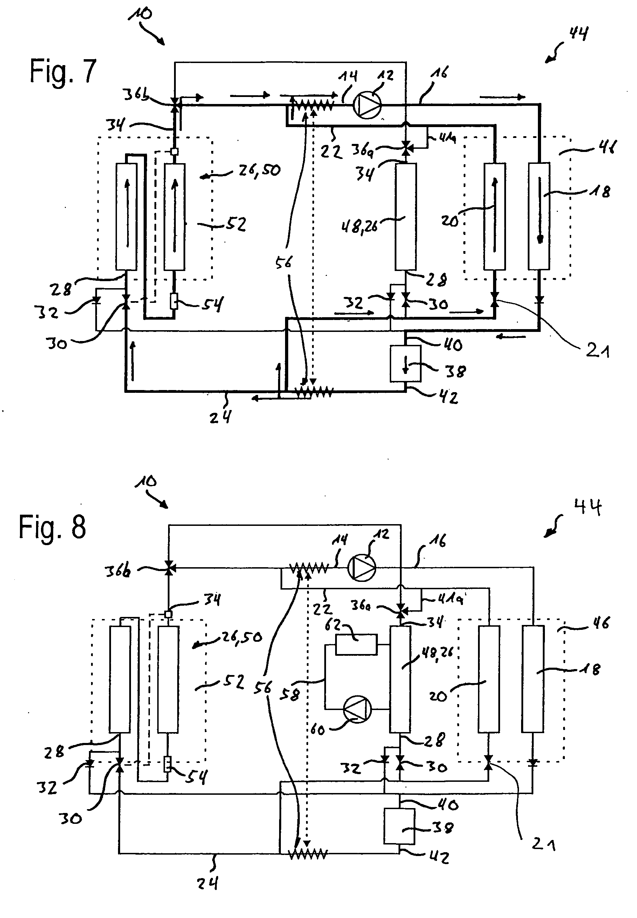

Analogously, Figures 6 and 7 illustrate the condenser mode (Figure 6) and the evaporator mode (Figure 7) for the second heat exchanger 26, 50. The control of the operating conditions is effected via the three-way valve 36b or the associated check valve 32 and the associated expansion valve 30.

The operating conditions shown in Figures 4 and 5 as well as 6 and 7 also can be combined independent of each other by correspondingly setting the three-way valves 36a, 36b. This means that a heat exchanger 48, 50 for example can be operated in the condenser mode by correspondingly setting the three-way valve 36a, 36b and at the same time the second heat exchanger 48, 50 can be operated in the evaporator mode. Alternatively, both heat exchangers 48, 50 can be operated simultaneously in the condenser mode or in the evaporator mode.

Figure 8 shows an embodiment of the vehicle air conditioning unit 44 which is slightly modified with respect to Figure 3, wherein an indirect battery cooling is provided. The reversible battery heat exchanger 48 provides for a heat transfer between the refrigerant circuit 10 and a coolant circuit 58 with water or a water-glycol mixture as coolant, which is pumped through the coolant circuit 58 by a pump 60 and passes through a battery cooler 62.

The other functions of the vehicle air conditioning unit are identical with the embodiment shown in Figures 3 to 7.

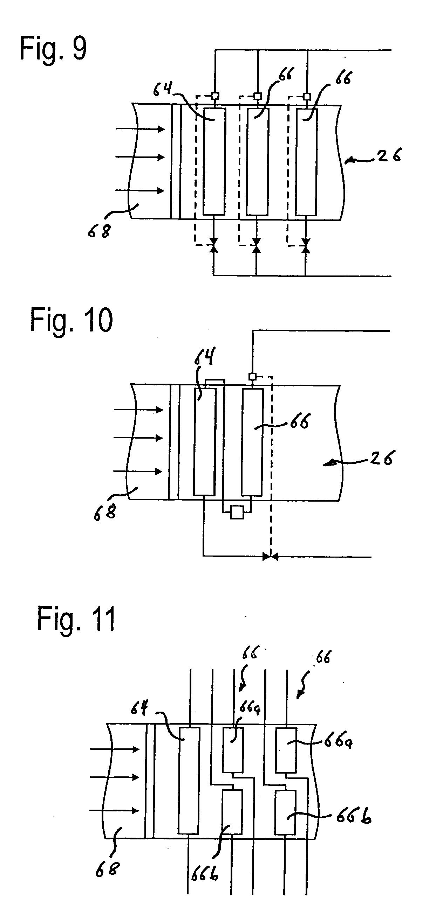

The heat exchanger 26 here is shown merely schematically. The construction of such heat exchanger 26 is shown in Figures 9 to 11.

Such heat exchanger 26 includes at least two stages 64, 66. In the exemplary embodiment shown in Figure 9, the heat exchanger 26 even comprises three stages 64, 66, 66 with a first stage 64 and two second stages 66.

The heat exchanger 26 is arranged in a useful air duct 68 of the vehicle. The useful air duct 68 for example can be provided in the region of the engine cooling at the front end of the vehicle. Ambient air enters into the air duct 68 and traverses the same in the flow direction indicated by the arrows.

The various stages 64, 66 of the heat exchanger 26 each include separate heat transfer fins, which provide for a good heat transfer between the refrigerant flowing through the refrigerant circuit and the air flowing through the useful air duct 68. The first stage 64 or the heat transfer fins of the first stage 64 of the heat exchanger 26 are arranged upstream of the second stages or the heat transfer fins of the second stages 66 in the air duct 68, wherein the second stages 66 are connected in parallel with respect to the flow in the air duct 68. Alternatively, the first stage 64 can however also be arranged downstream of the second stages 66 of the heat exchanger 26.

In the exemplary embodiment shown here, the stages 64, 66, 66 of the heat exchanger 26 are arranged parallel to each other. As shown in Figure 10, the stages 64, 66 also can alternatively be connected in series.

An alternative configuration of a heat exchanger 26 is shown in Figure 11. The second stages 66 here are divided into a plurality of segments 66a, 66b, which each can be operated independent of each other. These stages 66 can have common or separate fins. Due to this separation, the performance of the two stages 66 can be controlled independently, so that for example one segment 66a, 66b can be operated as evaporator and another segment 66a, 66b can be operated as condenser, if necessary. Such need exists for example when a segment 66a, 66b is strongly iced: This segment 66a, 66b then can be deiced in the condenser mode, while the other segment 66a, 66b or the other segments 66a, 66b still operate as evaporator. It thereby is avoided that the entire stage 66 is switched into the condenser mode, whereby despite the deicing operation of the partial stage it is still possible to gain heat for heating for example the vehicle interior.

## Claims

1. A refrigerant circuit (10) comprising
a compressor (12),
a low pressure branch (22),
a high pressure branch (24),
a condenser (18) which is connected with the high pressure side (16) of the compressor (12) and the high pressure branch (24),
an evaporator (20) which is connected with the low pressure side (14) of the compressor (12) and
a heat exchanger (26) which in one flow direction can be operated as evaporator,
wherein the heat exchanger (26) has a first port (28), which in the evaporator mode is connected with the high pressure branch (24) via an expansion valve (30), and a second port (34) which in the evaporator mode is connected with a low pressure side (14) of the compressor (12), **characterized in that** said heat exchanger (26) can be operated as condenser in a reverse flow direction, wherein in the condenser mode said first port (28) is connected directly with the high-pressure branch (24), and in the condenser mode said second port (34) is connected with a high pressure side (16) of the compressor (12).

2. The refrigerant circuit (10) according to claim 1, wherein the heat exchanger (26) is reversible, so that in the evaporator mode the refrigerant flows through the heat exchanger (26) from the first port (28) to the second port (34) and in the condenser mode the refrigerant in the heat exchanger (26) flows from the second port (34) to the first port (28).

3. The refrigerant circuit according to claim 1 or 2, wherein the high pressure branch (24) comprises a refrigerant reservoir (38) which includes a filling port (40) and a withdrawal port (42).

4. The refrigerant circuit according to claim 3, wherein the withdrawal port (42) is arranged at a point of the refrigerant reservoir (38) at which refrigerant accumulates in the liquid phase.

5. The refrigerant circuit according to claim 3 or 4, wherein in the evaporator mode the first port (28) of the heat exchanger (26) is connected with the withdrawal port (42) and in the condenser mode it is connected with the filling port (40) of the refrigerant reservoir (38).

6. The refrigerant circuit according to any of the preceding claims, wherein the second port (34) of the heat exchanger (26) includes a three-way valve (36).

7. The refrigerant circuit according to any of the preceding claims, wherein the first port (28) is connected with the high pressure branch (24) via a valve (32), preferably a check valve or shut-off valve.

8. The refrigerant circuit according to any of the preceding claims, wherein there are provided at least two heat exchangers (26, 48, 50) connected in parallel.

9. The refrigerant circuit according to any of the preceding claims, wherein an internal heat exchanger (56) is provided, which provides for a heat transfer between high pressure branch (24) and low pressure branch (22).

10. A vehicle air conditioning unit (44) with a refrigerant circuit (10) according to any of the preceding claims, wherein a condenser (18) for heating a vehicle interior (46), which is connected with the high pressure side (16) of the compressor (12) and the high pressure branch (24), and an evaporator (20) for cooling the vehicle interior (46) is provided, which is connected with the low pressure side (14) of the compressor (12) and the high pressure side (16) of the compressor (12).

11. The vehicle air conditioning unit according to claim 10, wherein the condenser (18) is connected with a filling port (40) of a refrigerant reservoir (38) and the evaporator (20) is connected with a withdrawal port (42) of the refrigerant reservoir (38).

12. The vehicle air conditioning unit according to claim 10 or 11, wherein at least one reversible heat exchanger (26, 48) is provided, which provides for a direct or indirect cooling or heating of a vehicle battery, preferably of an electric or hybrid vehicle.

13. The vehicle air conditioning unit according to any of claims 10 to 12, wherein at least one, preferably at least two reversible heat exchangers (26, 50) are provided in the cooling system (52) of a vehicle.

## Patentansprüche

1. Kältemittelkreislauf (10) mit
einem Kompressor (12),
einem Niederdruckzweig (22),
einem Hochdruckzweig (24),
einem Kondensator (18), der mit der Hochdruckseite (16) des Kompressors (12) und dem Hochdruckzweig (24) verbunden ist,
einem Verdampfer (20), der mit der Niederdruckseite (14) des Kompressors (12) verbunden ist, und
einem Wärmetauscher (26), der in einer Strömungsrichtung als Verdampfer betrieben werden kann,
wobei der Wärmetauscher (26) einen ersten Anschluss (28), der im Verdampferbetrieb über ein Expansionsventil (30) mit dem Hochdruckzweig (24) verbunden ist,
und einen zweiten Anschluss (34) aufweist, der im Verdampferbetrieb mit einer Niederdruckseite (14) des Kompressors (12) verbunden ist, **dadurch gekennzeichnet, dass** der Wärmetauscher (26) in einer Umkehrströmungsrichtung als Kondensator betrieben werden kann, wobei der erste Anschluss (28) im Kondensatorbetrieb direkt mit dem Hochdruckzweig (24) verbunden ist und der zweite Anschluss (34) im Kondensatorbetrieb mit einer Hochdruckseite (16) des Kompressors (12) verbunden ist.

2. Kältemittelkreislauf (10) nach Anspruch 1, wobei der Wärmetauscher (26) reversibel ist, so dass das Kältemittel im Verdampferbetrieb durch den Wärmetauscher (26) vom ersten Anschluss (28) zum zweiten Anschluss (34) strömt und das Kältemittel im Kondensatorbetrieb im Wärmetauscher (26) vom zweiten Anschluss (34) zum ersten Anschluss (28) strömt.

3. Kältemittelkreislauf nach Anspruch 1 oder 2, wobei der Hochdruckzweig (24) ein Kältemittelreservoir (38) umfasst, welches einen Befüllungsanschluss (40) und einen Entnahmeanschluss (42) aufweist.

4. Kältemittelkreislauf nach Anspruch 3, wobei der Entnahmeanschluss (42) an einer Stelle des Kältemittelreservoirs (38) angeordnet ist, an welcher sich Kältemittel in flüssiger Phase sammelt.

5. Kältemittelkreislauf nach Anspruch 3 oder 4, wobei der erste Anschluss (28) des Wärmetauschers (26) im Verdampferbetrieb mit dem Entnahmeanschluss (42) und im Kondensatorbetrieb mit dem Befüllungsanschluss (40) des Kältemittelreservoirs (38) verbunden ist.

6. Kältemittelkreislauf nach einem der vorhergehenden Ansprüche, wobei der zweite Anschluss (34) des Wärmetauschers (26) ein Dreiwegeventil (36) aufweist.

7. Kältemittelkreislauf nach einem der vorhergehenden Ansprüche, wobei der erste Anschluss (28) über ein Ventil (32), vorzugsweise ein Rückschlagventil oder Absperrventil, mit dem Hochdruckzweig (24) verbunden ist.

8. Kältemittelkreislauf nach einem der vorhergehenden Ansprüche, wobei zumindest zwei parallel geschaltete Wärmetauscher (26, 48, 50) vorgesehen sind.

9. Kältemittelkreislauf nach einem der vorhergehenden Ansprüche, wobei ein interner Wärmetauscher (56) vorgesehen ist, der eine Wärmeübertragung zwischen Hochdruckzweig (24) und Niederdruckzweig (22) ermöglicht.

10. Fahrzeugklimaanlage (44) mit einem Kältemittelkreislauf (10) nach einem der vorhergehenden Ansprüche, wobei ein Kondensator (18) zum Heizen eines Fahrzeuginnenraums (46), welcher mit der Hochdruckseite (16) des Kompressors (12) und dem Hochdruckzweig (24) verbunden ist, und ein Verdampfer (20) zum Kühlen des Fahrzeuginnenraums (46) vorgesehen ist, welcher mit der Niederdruckseite (14) des Kompressors (12) und der Hochdruckseite (16) des Kompressors (12) verbunden ist.

11. Fahrzeugklimaanlage nach Anspruch 10, wobei der Kondensator (18) mit einem Befüllungsanschluss (40) eines Kältemittelreservoirs (38) und der Verdampfer (20) mit einem Entnahmeanschluss (42) des Kältemittelreservoirs (38) verbunden ist.

12. Fahrzeugklimaanlage nach Anspruch 10 oder 11, wobei zumindest ein reversibler Wärmetauscher (26, 48) vorgesehen ist, der eine direkte oder indirekte Kühlung oder Heizung einer Fahrzeugbatterie, vorzugsweise eines Elektro- oder Hybridfahrzeugs, ermöglicht.

13. Fahrzeugklimaanlage nach einem der Ansprüche 10 bis 12, wobei zumindest ein, vorzugsweise zumindest zwei reversible Wärmetauscher (26, 50) im Kühlsystem (52) eines Fahrzeugs vorgesehen sind.

## Revendications

1. Circuit de fluide frigorigène (10), comportant
un compresseur (12),
une branche basse pression (22),
une branche haute pression (24),
un condenseur (18) qui est relié au côté haute pression (16) du compresseur (12) et à la branche haute pression (24),
un évaporateur (20) qui est relié au côté basse pression (14) du compresseur (12), et
un échangeur de chaleur (26) qui est apte à fonctionner en tant qu'évaporateur dans un sens d'écoulement,
l'échangeur de chaleur (26) présentant un premier raccord (28) qui est relié à la branche haute pression (24) par l'intermédiaire d'une soupape de détente (30) dans le mode évaporateur,
et un deuxième raccord (34) qui est relié à un côté basse pression (14) du compresseur (12) dans le mode évaporateur, **caractérisé en ce que** l'échangeur de chaleur (26) peut fonctionner en tant que condenseur dans un sens d'écoulement inverse, le premier raccord (28) étant directement relié à la branche haute pression (24) dans le mode condenseur, et le deuxième raccord (34) étant relié à un côté haute pression (16) du compresseur (12) dans le mode condenseur.

2. Circuit de fluide frigorigène (10) selon la revendication 1, dans lequel l'échangeur de chaleur (26) est réversible de telle sorte que dans le mode évaporateur, le fluide frigorigène s'écoule à travers l'échangeur de chaleur (26) du premier raccord (28) vers le deuxième raccord (34), et dans le mode condenseur, le fluide frigorigène dans l'échangeur de chaleur (26) s'écoule du deuxième raccord (34) vers le premier raccord (28).

3. Circuit de fluide frigorigène selon la revendication 1 ou 2, dans lequel la branche haute pression (24) comprend un réservoir de fluide frigorigène (38) qui présente un raccord de remplissage (40) et un raccord de prélèvement (42).

4. Circuit de fluide frigorigène selon la revendication 3, dans lequel le raccord de prélèvement (42) est agencé à un endroit du réservoir de fluide frigorigène (38) auquel du fluide frigorigène s'accumule en phase liquide.

5. Circuit de fluide frigorigène selon la revendication 3 ou 4, dans lequel dans le mode évaporateur, le premier raccord (28) de l'échangeur de chaleur (26) est relié au raccord de prélèvement (42), et dans le mode condenseur, il est relié au raccord de remplissage (40) du réservoir de fluide frigorigène (38).

6. Circuit de fluide frigorigène selon l'une des revendications précédentes, dans lequel le deuxième raccord (34) de l'échangeur de chaleur (26) présente une soupape à trois voies (36).

7. Circuit de fluide frigorigène selon l'une des revendications précédentes, dans lequel le premier raccord (28) est relié à la branche haute pression (24) par l'intermédiaire d'une soupape (32), de préférence une soupape de retenue ou une soupape d'arrêt.

8. Circuit de fluide frigorigène selon l'une des revendications précédentes, dans lequel il est prévu au moins deux échangeurs de chaleur (26, 48, 50) qui sont montés en parallèle.

9. Circuit de fluide frigorigène selon l'une des revendications précédentes, dans lequel il est prévu un échangeur de chaleur (56) interne qui permet un transfert de chaleur entre la branche haute pression (24) et la branche basse pression (22).

10. Installation de climatisation de véhicule (44) présentant un circuit de fluide frigorigène (10) selon l'une des revendications précédentes, dans laquelle il est prévu un condenseur (18) pour le chauffage d'un intérieur de véhicule (46), qui est relié au côté haute pression (16) du compresseur (12) et à la branche haute pression (24), et un évaporateur (20) pour le refroidissement de l'intérieur de véhicule (46), qui est relié au côté basse pression (14) du compresseur (12) et au côté haute pression (16) du compresseur (12).

11. Installation de climatisation de véhicule selon la revendication 10, dans laquelle le condenseur (18) est relié à un raccord de remplissage (40) d'un réservoir de fluide frigorigène (38) et l'évaporateur (20) est relié à un raccord de prélèvement (42) du réservoir de fluide frigorigène (38).

12. Installation de climatisation de véhicule selon la revendication 10 ou 11, dans laquelle il est prévu au moins un échangeur de chaleur réversible (26, 48) qui permet un refroidissement ou un chauffage direct ou indirect d'une batterie de véhicule, de préférence d'un véhicule électrique ou hybride.

13. Installation de climatisation de véhicule selon l'une des revendications 10 à 12, dans laquelle il est prévu au moins un, de préférence au moins deux échangeurs de chaleur réversibles (26, 50) dans le système de refroidissement (52) d'un véhicule.
